# EUROPEAN PATENT APPLICATION

(11) **EP 2 501 125 A1**
(43) Date of publication of application: **19.09.2012**
(21) Application number: 10847166.5
(22) Date of filing: 29.07.2010
(51) Int. Cl.: H04N 5/225, G01C 3/06, G03B 35/08, H04N 5/243, H04N 5/335, H04N 13/02

(54) **IMAGING DEVICE, IMAGING MEANS AND PROGRAM**

(30) Priority: 31.05.2010 JP 2010125195
(71) Applicant: Panasonic Corporation, Kadoma-shi Osaka 571-8501 (JP)
(72) Inventor: MURAMATSU, Hirokazu, Chuo-ku Osaka-shi Osaka 540-6207 (JP)
(74) Representative: Kügele, Bernhard
(86) International application number: PCT/JP2010/004813
(87) International publication number: WO 2011/151867

(57) **Abstract**

An imaging apparatus (1) comprises: a camera (100) (101) for generating a plurality of differently exposed images with parallax; an image brightness adjuster (200) (201) for adjusting the brightness of a plurality of images based on the exposure; a matching unit (21) (22) for using a plurality of brightness-adjusted images to perform matching between the images, and determining matching information; a distance calculator (31) for determining the distance to a given subject based on matching information; a position corrector (24) for correcting positions in an image with parallax so as to eliminate the parallax from the image with parallax, based on the matching information; and a wide dynamic range image generator (32) for combining a plurality of differently exposed images in which positions are corrected by the position corrector (24), and thereby generating an image having a wider dynamic range than images imaged by the camera (100) (101). Consequently, generation of a wide dynamic range image and measurement of the distance to a subject can be performed at the same time from differently exposed images with parallax taken at the same time.

## Description

### RELATED APPLICATION

This application claims the benefit of Japanese Patent Application No. 2010-125195 filed on May 31, 2010 in Japan, the contents of which are incorporated herein by reference.

### TECHNICAL FIELD

The invention relates to an imaging apparatus for imaging a plurality of differently exposed images with parallax, and more particularly to an imaging apparatus having functions of measuring the distance to a subject and of generating a wide dynamic range image into which a plurality of images are combined.

### BACKGROUND ART

In recent years, the use of digital cameras has been rapidly increasing in a wide range of applications such as security, infrastructure, and safety as is typified by surveillance cameras, in-vehicle cameras, and the like. Unlike performance requirements for digital cameras for general home use (e.g. high image quality and high resolution), use in such applications requires, for example, a wide dynamic range for reliably imaging a subject without the shadow and highlight details being lost under any circumstances and, for sensing purposes, a distance measurement function of measuring the distance to a subject.

A common way to generate a wide dynamic range image is to combine a plurality of images taken at different exposures, and there have been previously proposed a variety of techniques. A common technique to use a plurality of images with parallax to measure the distance to a subject in the images is to perform matching on the subject between the images and apply the principle of triangulation to the imaged position of the subject in each image. There also have been previously proposed a variety of methods for matching between images.

Various techniques have thus been independently proposed for generating wide dynamic range image and for measuring distance, while there have also been proposed techniques for performing both generation of a wide dynamic range image and measurement of distance from a plurality of differently exposed images with parallax. For example, an imaging apparatus described in Patent document 1 has a means of imaging a plurality of equally exposed images with parallax and a plurality of differently exposed images without parallax. This imaging apparatus measures the distance to a subject from the former images and generates a wide dynamic range image from the latter images, thereby providing both distance information and a wide dynamic range image.

### PRIOR ART DOCUMENT

### Patent document

Patent document 1: Japanese Patent Laid-Open Application No. 2003-18617

### SUMMARY OF THE INVENTION

### Problems to be solved by the invention

However, the conventional technique requires two equally exposed images with parallax for measuring the distance to a subject, two differently exposed images without parallax for generating a wide dynamic range image, and therefore at least 4 images in total.

Supposing that the images are taken by a common stereo camera, which can take two equally exposed images with parallax in one frame picture, images will therefore be taken in the tth frame at a given time at an exposure n, and be taken in the next (t + 1)th frame at an exposure m. Distance information can then be determined from two images taken in the same frame. However, generation of a wide dynamic range image requires that an image taken in the tth frame and an image taken in the (t + 1)th frame be combined, so there is a time lag in the imaging between the two images to be combined. There would be a problem of occurrence of a blurred image due to motion in a scene where a subject moves.

In a case where a stereo camera is used that can take two differently exposed images with parallax in one frame picture, images will be taken by a camera A at an exposure n and by a camera B at an exposure m in the tth frame at a given time, and be taken by the camera A at the exposure m and by the camera B at the exposure n in the (t + 1)th frame. A wide dynamic range image can then be generated from two images taken in the same frame. However, distance measurement is performed with images taken in different frames, and therefore there is a time lag in the imaging. There would be a problem of not capable of correctly calculating the distance to a subject in a scene where a subject moves, as the subject moves between frames.

A purpose of the invention made for solving the conventional problems is to provide an imaging apparatus and imaging method that perform generation of a wide dynamic range image and measurement of the distance to a subject at the same time.

### Means for solving the problems

An imaging apparatus of the invention comprises: an imager for imaging with a plurality of imaging devices at different exposures to generate differently exposed images with parallax; an image brightness adjuster for adjusting the brightness of a plurality of images imaged by the imager, based on the exposure used for imaging each image; a matching unit for using a plurality of brightness-adjusted images with parallax to perform matching between the images, and determining matching information that specifies areas corresponding to one another between the images with parallax; a distance calculator for determining the distance to a given subject based on matching information on areas constituting an image of the subject; a position corrector for correcting positions in an image with parallax so as to eliminate the parallax from the image with parallax, based on the matching information; and a wide dynamic range image generator for combining a plurality of differently exposed images in which positions are corrected by the position corrector, and thereby generating an image having a wider dynamic range than images imaged by the imager.

### Advantages of the invention

The invention has a great advantage of being able to perform generation of a wide dynamic range image and measurement of the distance to a subject at the same time.

There are other aspects of the invention as described below. This disclosure of the invention therefore intends to provide part of the aspects of the invention and does not intend to limit the scope of the invention described and claimed herein.

### BRIEF DESCRIPTION OF THE DRAWINGS

Figure 1 is a block diagram showing a schematic configuration of an imaging apparatus of an embodiment of the invention;
Figure 2 shows a usual exposure control of the embodiment of the invention;
Figure 3 shows an exposure control of the embodiment of the invention;
Figure 4 shows an image exposure change made to an image from an imager 100 of the embodiment of the invention;
Figure 5 shows an image exposure change made to an image from an imager 101 of the embodiment of the invention;
Figure 6 shows a flow of image matching of the embodiment of the invention;
Figure 7 is an operation flowchart of a matching interpolation process of the embodiment of the invention;
Figure 8A shows matching information m on each pixel constituting an image;
Figure 8B shows matching information n on each pixel constituting the image;
Figure 8C shows integrated matching information;
Figure 9 is a block diagram showing an interpolation process for matching information of the embodiment of the invention;
Figure 10 is a block diagram showing position correction in an image of the embodiment of the invention; and
Figure 11 is a block diagram showing generation of a wide dynamic range image of the embodiment of the invention.

### MODE OF EMBODYING THE INVENTION

The following is a detailed description of the invention. The embodiments described below are only examples of the invention, and the invention can be varied in various aspects. Therefore, the specific configurations and functions disclosed below do not limit the claims.

An imaging apparatus of the embodiment comprises: an imager for imaging with a plurality of imaging devices at different exposures to generate differently exposed images with parallax; an image brightness adjuster for adjusting the brightness of a plurality of images imaged by the imager, based on the exposure used for imaging each image; a matching unit for using a plurality of brightness-adjusted images with parallax to perform matching between the images, and determining matching information that specifies areas corresponding to one another between the images with parallax; a distance calculator for determining the distance to a given subject based on matching information on areas constituting an image of the subject; a position corrector for correcting positions in an image with parallax so as to eliminate the parallax from the image with parallax, based on the matching information; and a wide dynamic range image generator for combining a plurality of differently exposed images in which positions are corrected by the position corrector, and thereby generating an image having a wider dynamic range than images imaged by the imager.

In this configuration, generation of a wide dynamic range image and measurement of the distance to a subject can be performed at the same time.

The imaging apparatus of the embodiment has a configuration in which the image brightness adjuster adjusts the brightness of images using the ratio of exposures used for imaging each image.

In this configuration, images with parallax whose difference in brightness caused by a difference in exposure is adjusted can be obtained from a plurality of differently exposed images with parallax.

The imaging apparatus of the embodiment has a configuration in which: the imager images and thereby generates differently exposed first and second images with parallax; the image brightness adjuster generates an adjusted first image that is the first image whose brightness is adjusted based on the exposure of the second image and an adjusted second image that is the second image whose brightness is adjusted based on the exposure of the first image; and the matching unit performs matching between the first image and the adjusted second image to determine first matching information, performs matching between the adjusted first image and the second image to determine second matching information, and integrates the first matching information and the second matching information to determine the matching information.

This configuration allows the matching information to be appropriately generated by using the first and second matching information.

The imaging apparatus of the embodiment has a configuration in which the matching unit, for an area whose corresponding area is not determined by the matching between the first image and the adjusted second image nor by the matching between the adjusted first image and the second image, determines the correspondence relation by an interpolation process using correspondence information on an area surrounding the area concerned.

This configuration allows the matching information to be determined also for an area whose complete correspondence relation is not determined by matching between images whose image brightness is adjusted, by interpolating matching information on the surrounding area.

An imaging method of the embodiment comprises the steps of: imaging with a plurality of imaging devices at different exposures to generate differently exposed images with parallax; adjusting the brightness of a plurality of imaged images based on the exposure used for imaging each image; using a plurality of brightness-adjusted images with parallax to perform matching between the images, and determining matching information that specifies areas corresponding to one another between the images with parallax; determining the distance to a given subject based on matching information on areas constituting an image of the subject; correcting positions in an image with parallax so as to eliminate the parallax from the image with parallax, based on the matching information; and combining a plurality of differently exposed images in which positions are corrected in the position correction step, and thereby generating an image having a wider dynamic range than the imaged images.

A program of the embodiment has a configuration for, in order to generate images based on a plurality of images with parallax imaged at different exposures, causing a computer to execute the steps of: adjusting the brightness of a plurality of images based on the exposure used for imaging each image; using a plurality of brightness-adjusted images with parallax to perform matching between the images, and determining matching information that specifies areas corresponding to one another between the images with parallax; determining the distance to a given subject based on matching information on areas constituting an image of the subject; correcting positions in an image with parallax so as to eliminate the parallax from the image with parallax, based on the matching information; and combining a plurality of differently exposed images in which positions are corrected in the position correction step, and thereby generating an image having a wider dynamic range than the imaged images.

In this configuration, the imaging method and program of the embodiment can generate a wide dynamic range image and measure the distance to a subject at the same time. Various configurations of the imaging apparatus of the embodiment can be applied to the imaging method and program of the embodiment.

Now, an imaging apparatus of an embodiment of the invention will be described with reference to the drawings.

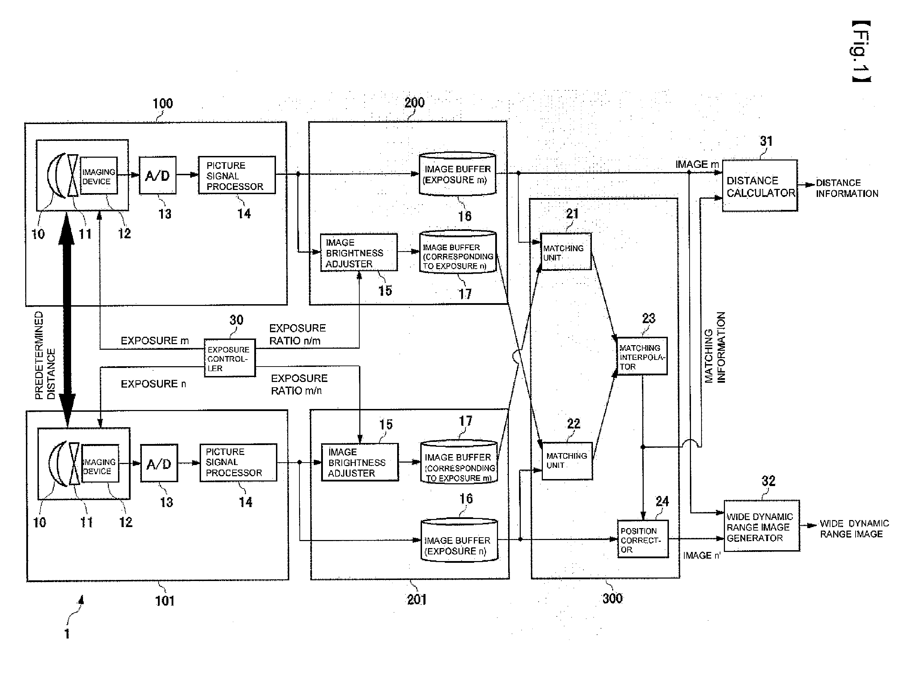

Figure 1 shows a configuration of an imaging apparatus 1 of an embodiment. The imaging apparatus 1 comprises: cameras 100 and 101 for performing a basic imaging function of imaging a subject and of outputting the picture signal; an exposure controller 30 for separately controlling the exposures of the cameras 100 and 101 so that they provide a predetermined exposure ratio; an image exposure changer 200 for storing in an image buffer the image outputted from the camera 100 and an image that is the very image whose brightness is adjusted; an image exposure changer 201 for storing in an image buffer the image outputted from the camera 101 and an image that is the very image whose brightness is adjusted; an image parallax corrector 300 for performing matching between images stored by the image exposure changers 200 and 201 and whose exposures are virtually equal to each other, performing integration and an interpolation process on matching information based on matching information obtained by the matching and, based on the integrated matching information, correcting positions in the image imaged by the camera 101 so as to eliminate parallax between it and the image imaged by the camera 100; a distance calculator 31 for, from the image imaged by the camera 100 and the matching information determined by the image parallax corrector 300, calculating the distance from the imaging apparatus to a subject in the image; and a wide dynamic range image generator 32 for combining the image imaged by the camera 100 and the image in which positions are corrected by the image parallax corrector 300, and thereby generating a wide dynamic range image. The cameras 100 and 101 are horizontally installed a predetermined distance apart. The cameras 100 and 101 constitute the "imager" of the invention.

The camera 100 comprises a lens 10, an aperture 11, an imaging device 12, an A/D converter 13, and a picture signal processor 14. The camera 100 adjusts the aperture and shutter speed (not shown) so as to achieve an exposure (exposure m) specified by the exposure controller 30, and takes an image. Light incident from a subject through the lens 10 is restricted by the aperture 11 to form an image on the imaging device 12. The imaging device 12 photoelectrically converts the formed image and outputs the analog signal. The A/D converter 13 converts the analog signal outputted from the imaging device 12 to a digital signal. The picture signal processor 14 performs signal processing for generating a picture signal from the A/D-converted digital signal. The picture signal processor 14 performs brightness signal generation, color signal generation, aperture signal generation, and other signal processing, as well as OB subtraction, white balance adjustment, noise reduction, and other common picture signal processing.

The camera 101 has the same configuration as the camera 100. The camera 101 adjusts the aperture and shutter speed so as to achieve an exposure (exposure n) specified by the exposure controller 30, and takes an image.

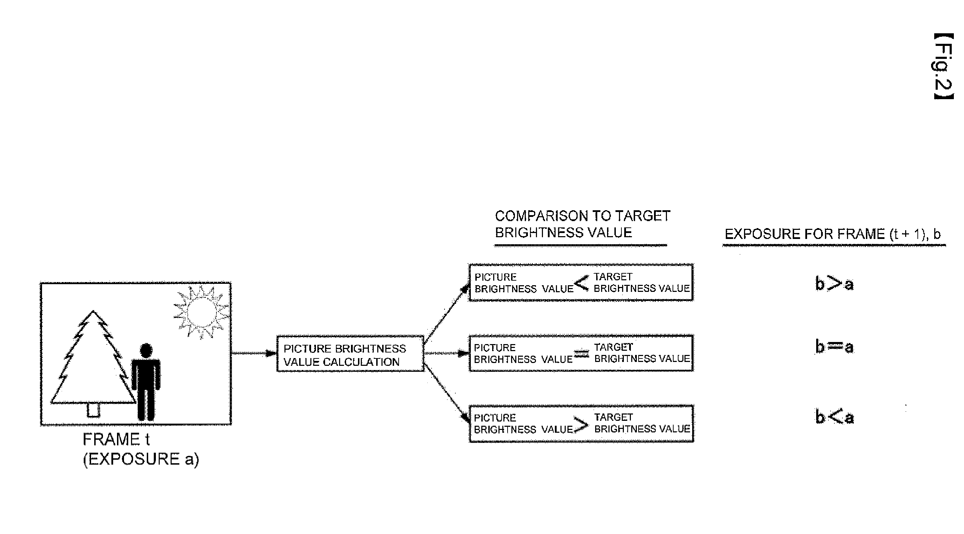

The exposure controller 30 for controlling the exposure of the cameras 100 and 101 will next be described. First, a usual exposure control method will be described with reference to Figure 2. Usually, the exposure is controlled so that the brightness value of a picture becomes equal to a predetermined target brightness value. For example, a picture brightness value is determined at a frame t (exposure a). An average value for the whole picture or some kind of picture-center-weighted value may be used as the picture brightness value.

The picture brightness value is compared to the predetermined target brightness value and, if the picture brightness value is smaller than the target brightness value, the exposure for a frame t + 1 (exposure b) is set to b > a so that the frame t + 1 becomes brighter than the frame t. As the imaging operation, the exposure is increased by opening up the aperture or setting the shutter speed slower so that the exposure becomes larger. Conversely, if the picture brightness value is larger than the target brightness value, the exposure for the frame t + 1 is set to b < a so that the frame t + 1 becomes darker than the frame t. As the imaging operation, the exposure is decreased by stopping down the aperture or setting the shutter speed faster. If the picture brightness value is equal to the target brightness value, the exposure a is an appropriate exposure and therefore the exposure for the frame t + 1 is set to b = a. This is the general exposure control.

In the embodiment, differently exposed images are combined to generate a wide dynamic range image in which subjects ranging from bright subjects to dark subjects can be imaged, so the cameras 100 and 101 are set to exposures different from each other.

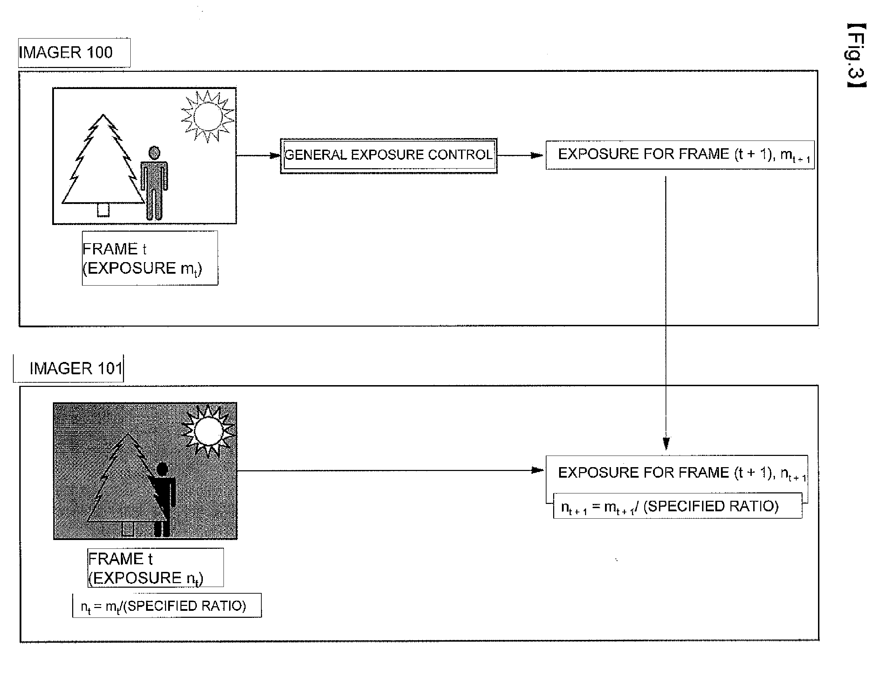

Figure 3 illustrates the exposure control of the embodiment. For example, if the exposure of the camera 100 for a frame t is mₜ, the exposure of the camera 101, nₜ, is provided to be 1/(a specified ratio) of the exposure mₜ. The specified ratio may be any value and, here, the exposure nₜ is mₜ/8 with the specified ratio being assumed to be eight for the purpose of illustration. That is, since the exposure nₜ is 1/8 of the exposure mₜ, an image imaged by the camera 101 becomes eight times darker than that by the camera 100. In other words, the upper limit of illuminance of a subject that can be imaged by the camera 101 is eight times as high as that by the camera 100.

As a result, for example, a subject like the sun whose highlight details are lost due to its extreme brightness with the camera 100 becomes able to be imaged at an appropriate brightness with the camera 101. Conversely, a subject like a tree or person which can be imaged at an appropriate brightness with the camera 100 is imaged dark with the camera 101. Since the camera 100 performs the previously-described usual exposure control to determine the exposure m_{t + 1} for the next frame t + 1 but the exposure of the camera 101 can be calculated with reference to the exposure of the camera 100, the camera 101 does not perform the usual exposure control but determines the exposure by n_{t + 1} = m_{t + 1}/(thy specified ratio) based on the exposure m_{t + 1} determined by the camera 100. While a wider dynamic range image can be generated as the specified ratio becomes larger, there are problems in some aspects such as image quality due to the need to combine much differently exposed images, and it is required to establish a moderate specified ratio in consideration of both the expansion of the dynamic range and the adverse effect of image quality degradation.

By combining the two images imaged in such a brightness relation, a wide dynamic range image can be generated in which subjects ranging from bright subjects to dark subjects are imaged at an appropriate brightness.

Returning to Figure 1, the image exposure changer 200 comprises an image brightness adjuster 15, and image buffers 16 and 17.

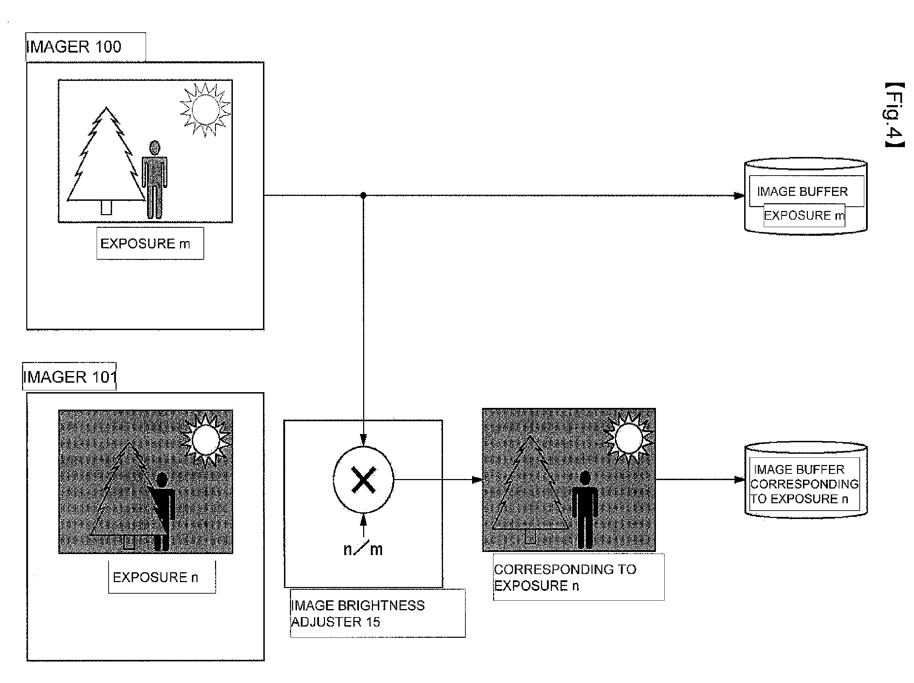

Figure 4 illustrates the image exposure changer 200. The image brightness adjuster 15 of the image exposure changer 200 multiplies an image imaged by the camera 100 by, as a gain, the exposure ratio between the cameras 100 and 101 inputted from the exposure controller 30. Now, if the exposure of the camera 100 is m and the exposure of the camera 101 is n, then the gain is n/m. As a result, an image corresponding to an image imaged at the exposure n by the camera 101 can be virtually generated from an image imaged at the exposure m by the camera 100. These two images are separately stored in the image buffers 16 and 17.

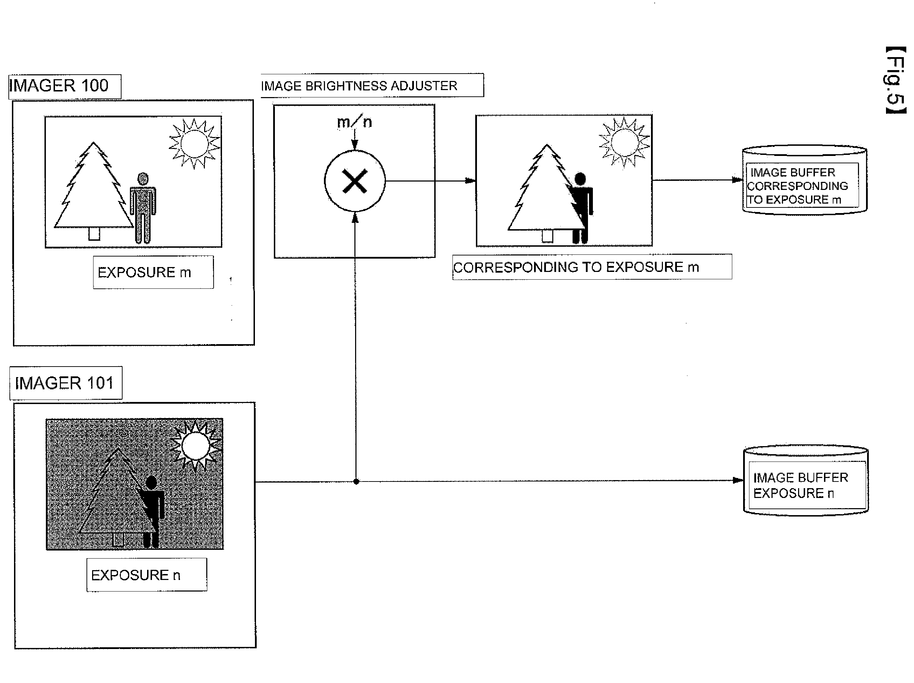

Figure 5 illustrates the image exposure changer 201. The image exposure changer 201 has the same configuration as the image exposure changer 200. The image brightness adjuster 15 of the image exposure changer 201 multiplies an image imaged by the camera 101 by, as a gain, the exposure ratio between the cameras 100 and 101, m/n, inputted from the exposure controller 30. As a result, an image corresponding to an image imaged at the exposure m by the camera 100 can be virtually generated from an image imaged at the exposure n by the camera 101. These two images are separately stored in the image buffers 16 and 17.

Returning to Figure 1, the image parallax corrector 300 comprises matching units 21 and 22, a matching interpolator 23, and a position corrector 24.

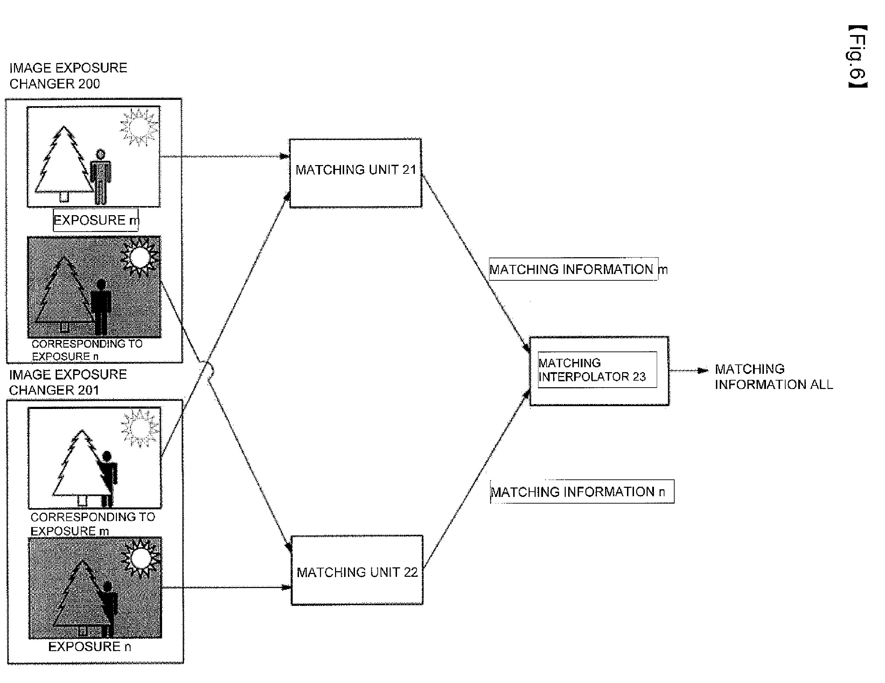

Figure 6 illustrates matching between images. An image imaged by the camera 100 (exposure m) is stored in the image buffer 16 of the image exposure changer 200, and a brightness-adjusted image (corresponding to the exposure n) is stored in the image buffer 17 of the image exposure changer 200. An image imaged by the camera 101 (exposure n) is stored in the image buffer 16 of the image exposure changer 201, and a brightness-adjusted image (corresponding to the exposure m) is stored in the image buffer 17 of the image exposure changer 201. These four images are inputted to the image parallax corrector 300.

The matching unit 21 performs image matching between two images, an image (exposure m) and an image (corresponding to the exposure m), and the matching unit 22 performs image matching between two images, an image (exposure n) and an image (corresponding to the exposure n). That is, matching is performed between images with parallax imaged at equal exposures. A known method is applied here as the technique of matching between two images, and the invention is not limited to a particular matching technique. This matching can establish the correspondence of pixels between images. The information showing this correspondence is called matching information. The result of the matching performed between the image (exposure m) and the image (corresponding to the exposure m) is referred to as matching information m, and the result of the matching performed between the image (exposure n) and the image (corresponding to the exposure n) is referred to as matching information n. The matching interpolator 23 integrates and interpolates the matching information m and n, thereby generating matching information ALL for each pixel in the images.

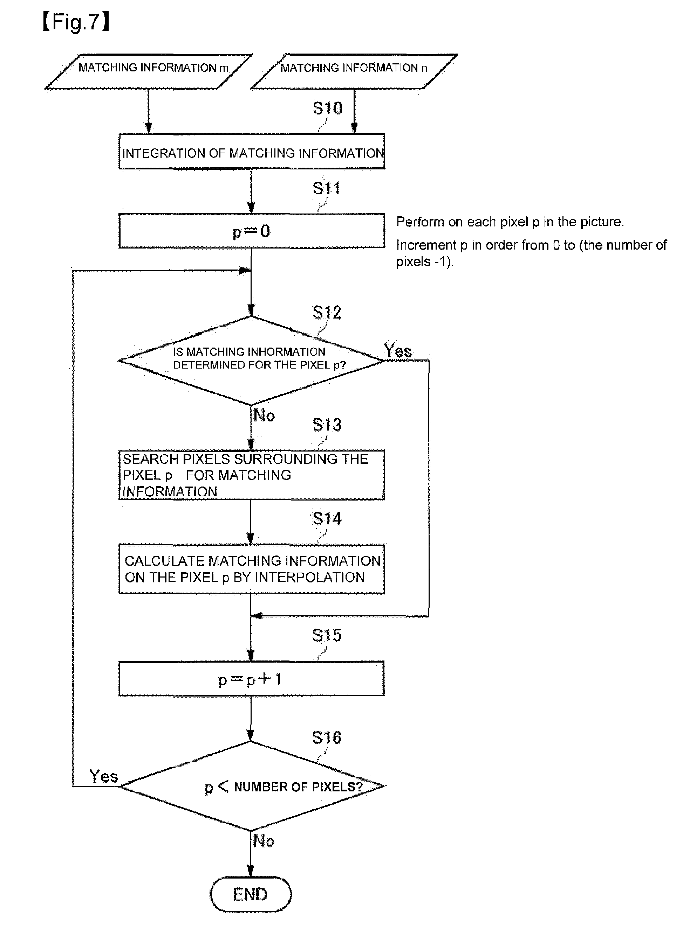

Figure 7 is a flowchart for generating the matching information ALL. The process by the matching interpolator 23 will be described with reference to Figure 7. First, the matching interpolator 23 performs a step of integrating matching information based on the matching information m and n (s10). The following flow is performed based on the integrated matching information. The matching interpolator 23 then performs the following steps on all pixels in the picture (s11 to s16). That is, Pixel 0 is first picked as a target pixel (s11); the following steps (s12 to s16) are performed on the target pixel; and the pixel to be the target pixel is then incremented in order, which allows the process to be performed on all pixels. A description will be made in the following with the target pixel being p.

The matching interpolator 23 judges whether matching information is determined for the target pixel p or not (s12) and, if the matching information has already been determined, goes on to the process for the next pixel (s15). If the matching information has not been determined, the matching interpolator 23 searches for a pixel surrounding the target pixel p and whose matching information has been determined (s13), determines the matching information on the target pixel p by interpolating the matching information on the surrounding pixel, and provides the target pixel p with the matching information determined by the interpolation (s14). Since this allows the matching information to be determined for the target pixel p, the matching interpolator 23 goes on to the process for the next pixel (s15). When the matching interpolator 23 has finished processing all pixels as the target pixel, the matching interpolator 23 ends the process (s16). At the end of the process, a state is achieved in which all pixels are provided with matching information.

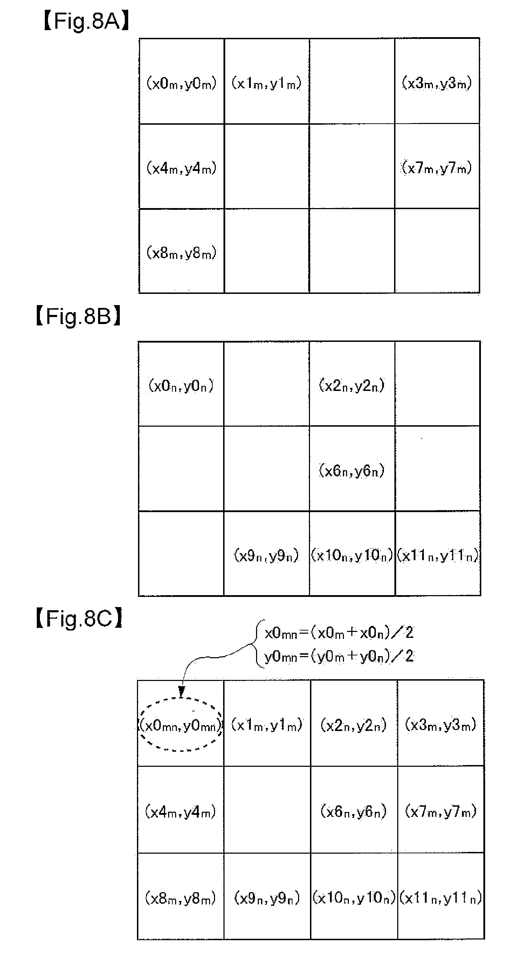

Figures 8A to 8C illustrate the matching integration step (s10) in the flowchart of Figure 7. For convenience of description, Figure 8A to 8C show schematic diagrams in which an image is simplified to 12 pixels in total comprising four horizontal pixels by three vertical pixels. In the description, the pixels are referred to as Pixel 0, Pixel 1, Pixel 2, and Pixel 3 in order from top left to top right of the pixels and, moving one row down, further as Pixel 4, Pixel 5, ... , Pixel 11 in order from left to right. The description of (x, y) in each pixel is the matching information, which indicates coordinate values or relative coordinate values of corresponding pixels between images.

Figure 8A shows the matching information m on each pixel, i.e. the state of matching determined from the image of the exposure m and the image corresponding to the exposure m. Figure 8A shows that the matching information m is determined for Pixels 0, 1, 3, 4, 7, and 8, and that the matching information is not determined for the other pixels.

Figure 8B shows the matching information n on each pixel, i.e. the state of matching determined from the image of the exposure n and the image corresponding to the exposure n. Figure 8B shows that the matching information n is determined for Pixels 0, 2, 6, 9, 10, and 11, and that the matching information is not determined for the other pixels.

Figure 8C shows a result of integration of the above matching information m and n. In the integration of matching information shown in Figure 8C, matching information on a pixel is applied as is if the matching information on the pixel is determined by only one of the matching information m and n. In the figure, Pixels 1, 2, 3, 4, 6, 7, 8, 9, 10, and 11 correspond to that case. As for a pixel whose matching information is determined by both matching information m and n, an average value of the two pieces of matching information is set as the matching information after the integration. In Figure 8C, Pixel 0 corresponds to that case. Although an average value is used here, either matching information may be preferentially set as the matching information after the integration. As for a pixel whose matching information is determined by neither matching information m nor n, the matching information is not determined at the point of the integration step. In Figure 8C, Pixel 5 corresponds to that case.

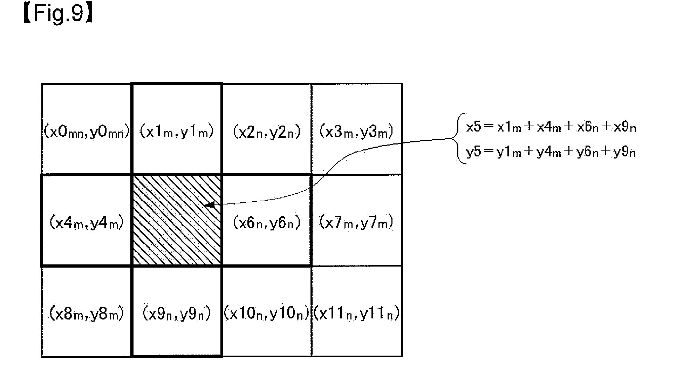

Figure 9 illustrates the interpolation process for matching information in the flowchart of Figure 7 (s12 to s14). Figure 9 shows the result of the integration of the matching information in Figure 8C, and Pixel 5 is not provided with matching information at the point of the matching information integration. In the interpolation process for matching information, pixels surrounding a pixel provided with no matching information are searched for a pixel provided with matching information. In the example shown in Figure 9, Pixels 1, 4, 6, and 9 surrounding Pixel 5 are provided with matching information. Figure 9 shows an example of calculating the matching information on Pixel 5, (x5, y5), by interpolating based on the matching information separately provided to the four surrounding pixels. In this way, a pixel provided with no matching information at the point of matching information integration is provided with matching information by interpolating matching information on surrounding pixels, and thus all pixels are provided with matching information. The above is a description of the matching interpolator 23. Although an example has been shown here in which the interpolation is performed by using four surrounding pixels, pixels in a wider area may be referred to, or matching information on one of the left, right, upper, and lower pixels may be simply assigned.

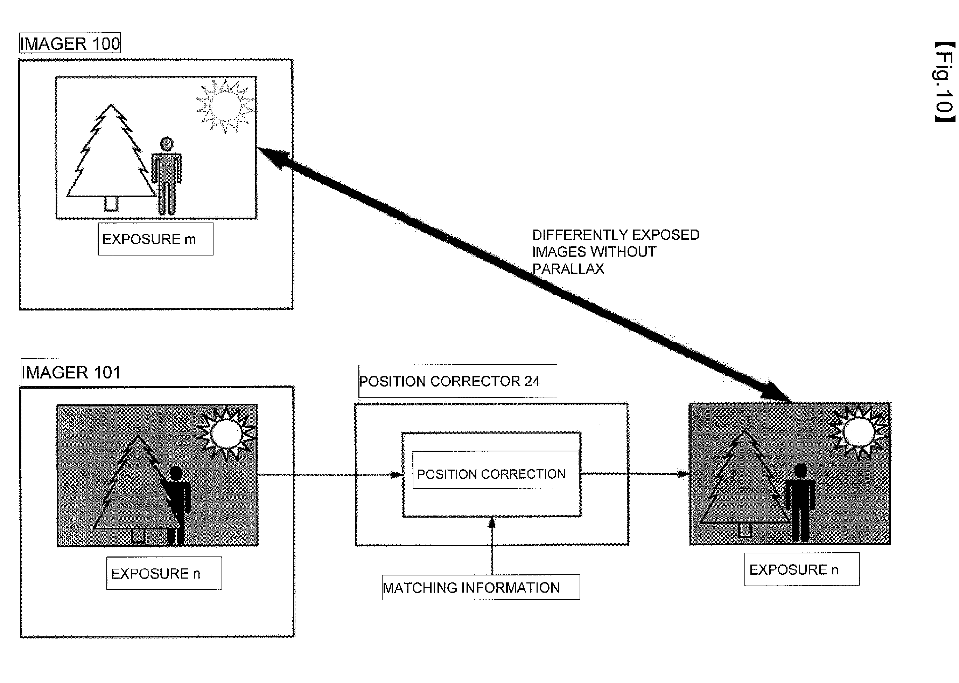

Figure 10 illustrates the position corrector 24. The position corrector 24 corrects positions in the image imaged by the camera 101 (exposure n) so as to eliminate parallax between it and the image imaged by the camera 100 (exposure m). The processes by the matching units 21 and 22 and matching interpolator 23 have already determined the matching information ALL in which the pixel-by-pixel correspondence is established between the images imaged by the cameras 100 and 101, so this matching information is used to perform the position correction. As a result of the position correction, the image imaged by the camera 101 (exposure n) becomes an image without parallax between it and the image imaged by the camera 100 (exposure m). That is, two differently exposed images without parallax are generated.

The distance calculator 31 then uses the image imaged by the camera 100 and the matching information ALL to calculate the distance from the camera 100 to a subject in the image. Since the cameras 100 and 101 are horizontally installed a predetermined distance apart in advance, the distance can be determined by applying a known triangulation method as the method of calculating the distance to a subject. The matching information may also be applied to the image imaged by the camera 101 and to a wide dynamic range image generated by the wide dynamic range image generator 32 as well, so the image is not limited to the image imaged by the camera 100.

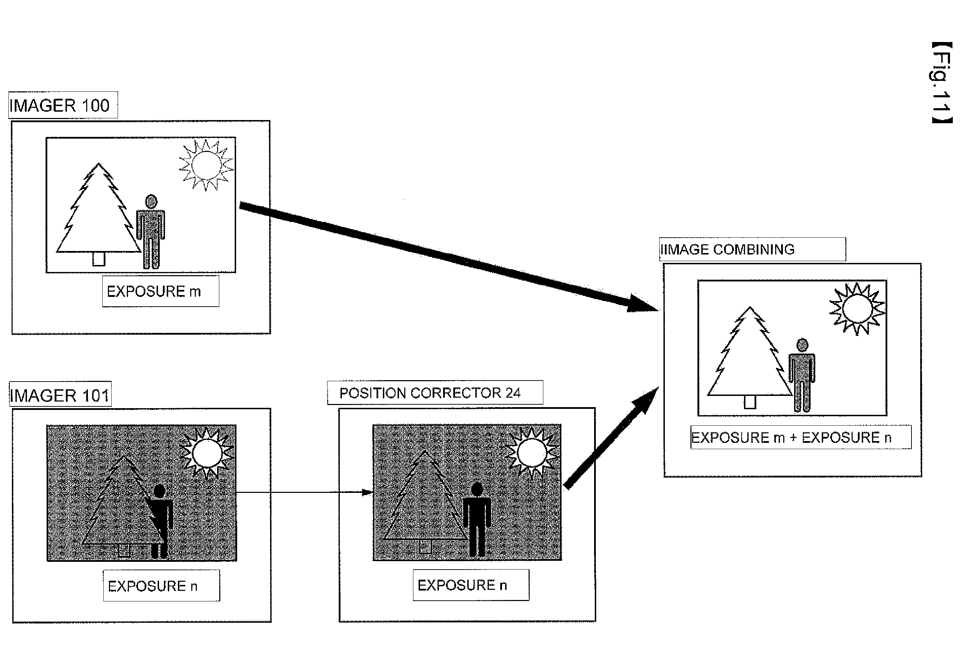

The wide dynamic range image generator 32 combines the two images, i.e. the image imaged by the camera 100 (exposure m) and the image imaged by the camera 101 and in which positions are corrected by the position corrector 24 (exposure n), to generate a wide dynamic range image that is an image separately imaged at appropriate brightness levels of the exposures m and n (see Figure 11). A known technique is applied to the method of combining two differently exposed images. Known techniques include a technique described in, for example, Japanese Patent No. 4163353 referred to in Patent document 1.

As seen above, the imaging apparatus of the embodiment can perform generation of a wide dynamic range image and measurement of the distance to a subject at the same time by generating virtually equally exposed images from differently exposed images with parallax taken at the same time.

In the imaging apparatus of the embodiment described above, the image exposure changers 200 and 201, the image parallax corrector 300, the distance calculator 31, and the wide dynamic range image generator 32 may be implemented by executing a program on a computer. Such a program is included in the scope of the invention.

While there have been described what are at present considered to be preferred embodiments of the invention, various modifications and variations may be made thereto, and it is intended that appended claims cover all such modifications and variations as fall within the true spirit and scope of the invention.

### INDUSTRIAL APPLICABILITY

As stated above, the imaging apparatus according to the invention has a great advantage of being able to perform generation of a wide dynamic range image and measurement of the distance to a subject at the same time from differently exposed images with parallax taken at the same time, and is useful for sensing-type camera systems or the like that require a wide dynamic range image and distance information.

### DESCRIPTION OF THE SYMBOLS

1: Imaging apparatus
10: Lens
11: Aperture
12: Imaging device
13: A/D converter
14: Picture signal processor
15: Image brightness adjuster
16, 17: Image buffer
21, 22: Matching unit
23: Matching interpolator
24: Position corrector
30: Exposure controller
31: Distance calculator
32: Wide dynamic range image generator
100, 101: Camera
200, 201: Image exposure changer
300: Image parallax corrector

## Claims

1. An imaging apparatus comprising:
an imager for imaging with a plurality of imaging devices at different exposures to generate differently exposed images with parallax;
an image brightness adjuster for adjusting the brightness of a plurality of images imaged by the imager, based on the exposure used for imaging each image;
a matching unit for using a plurality of brightness-adjusted images with parallax to perform matching between the images, and determining matching information that specifies areas corresponding to one another between the images with parallax;
a distance calculator for determining the distance to a given subject based on matching information on areas constituting an image of the subject;
a position corrector for correcting positions in an image with parallax so as to eliminate the parallax from the image with parallax, based on the matching information; and
a wide dynamic range image generator for combining a plurality of differently exposed images in which positions are corrected by the position corrector, and thereby generating an image having a wider dynamic range than images imaged by the imager.

2. The imaging apparatus according to claim 1, wherein the image brightness adjuster adjusts the brightness of images using the ratio of exposures used for imaging each image.

3. The imaging apparatus according to claim 1 or 2,
wherein the imager images and thereby generates differently exposed first and second images with parallax;
wherein the image brightness adjuster generates an adjusted first image that is the first image whose brightness is adjusted based on the exposure of the second image and an adjusted second image that is the second image whose brightness is adjusted based on the exposure of the first image; and
wherein the matching unit performs matching between the first image and the adjusted second image to determine first matching information, performs matching between the adjusted first image and the second image to determine second matching information, and integrates the first matching information and the second matching information to determine the matching information.

4. The imaging apparatus according to claim 3, wherein the matching unit, for an area whose corresponding area is not determined by the matching between the first image and the adjusted second image nor by the matching between the adjusted first image and the second image, determines the correspondence relation by an interpolation process using correspondence information on an area surrounding the area concerned.

5. An imaging method comprising the steps of:
imaging with a plurality of imaging devices at different exposures to generate differently exposed images with parallax;
adjusting the brightness of a plurality of imaged images based on the exposure used for imaging each image;
using a plurality of brightness-adjusted images with parallax to perform matching between the images, and determining matching information that specifies areas corresponding to one another between the images with parallax;
determining the distance to a given subject based on matching information on areas constituting an image of the subject;
correcting positions in an image with parallax so as to eliminate the parallax from the image with parallax, based on the matching information; and
combining a plurality of differently exposed images in which positions are corrected in the position correction step, and thereby generating an image having a wider dynamic range than the imaged images.

6. A program for, in order to generate images based on a plurality of images with parallax imaged at different exposures, causing a computer to execute the steps of:
adjusting the brightness of a plurality of images based on the exposure used for imaging each image;
using a plurality of brightness-adjusted images with parallax to perform matching between the images, and determining matching information that specifies areas corresponding to one another between the images with parallax;
determining the distance to a given subject based on matching information on areas constituting an image of the subject;
correcting positions in an image with parallax so as to eliminate the parallax from the image with parallax, based on the matching information; and
combining a plurality of differently exposed images in which positions are corrected in the position correction step, and thereby generating an image having a wider dynamic range than the imaged images.
